## Europäisches Patentamt
## European Patent Office
## Office européen des brevets

(11) Veröffentlichungsnummer: **0 322 832 B1**

# EUROPÄISCHE PATENTSCHRIFT

(45) Veröffentlichungstag der Patentschrift: **15.07.92**

(51) Int. Cl.⁵: **H02K 5/14**, H02K 5/15, H02K 23/66

(21) Anmeldenummer: **88121659.2**

(22) Anmeldetag: **24.12.88**

(54) **Elektrischer Universalmotor.**

(30) Priorität: **30.12.87 DE 3744488**

(43) Veröffentlichungstag der Anmeldung:
**05.07.89 Patentblatt 89/27**

(45) Bekanntmachung des Hinweises auf die
Patenterteilung:
**15.07.92 Patentblatt 92/29**

(84) Benannte Vertragsstaaten:
**AT BE CH DE ES FR GB GR IT LI LU NL SE**

(56) Entgegenhaltungen:
**EP-A- 0 139 451        EP-A- 0 215 334
EP-A- 0 224 053        DE-C- 971 979
US-A- 4 110 644        US-A- 4 322 647**

(73) Patentinhaber: **Kress-elektrik GmbH + Co.
Elektromotorenfabrik
Hechinger Strasse
W-7457 Bisingen(DE)**

(72) Erfinder: **Kress, Willy
Breitenwasen 21
W-7457 Bisingen(DE)**
Erfinder: **Seifert, Josef
Nikolausweg 30
W-7451 Grosselfingen(DE)**

(74) Vertreter: **Otte, Peter, Dipl.-Ing.
Tiroler Strasse 15
W-7250 Leonberg(DE)**

# Beschreibung

Stand der Technik

Die Erfindung geht aus von einem elektrischen Universalmotor nach dem Oberbegriff des Anspruchs 1. Ein bekannter elektrischer Universalmotor dieser Art (EP-A-215 334 oder auch DE-B-10 54 156) ist so aufgebaut, daß beidseitige Lagerschilde bügelförmig ausgebildet und mit Fortsätzen bis zum Statorpaket geführt und mit diesem direkt verbunden sind. Ferner weisen beide Lagerschilde zentrale Bohrungen für die Aufnahme von Lager für die Ankerwelle enthaltenden Lagereinsätzen auf. Hierdurch läßt sich zwar ein kostengünstiger Grundaufbau realisieren; die Kohlebürsten sitzen jedoch in unmittelbar in Öffnungen des B-Lagerschildes angeordneten Bürstenhaltern, jedenfalls bei der DE-B-10 54 156, wobei bei beiden Dokumenten auf ihre elektrischen Anschlüsse sowie die elektrische Verschaltung des Motors allgemein nicht eingegangen ist.

Ein vergleichbarer Aufbau mit beidseitigen, auf einer Seite unter Umständen auch becherförmig ausgebildeten Lagerschilden läßt sich ferner noch der FR-PS 15 64 030 sowie dem DE-GM 18 54 861 als bekannt entnehmen.

Hierzu gehört ferner noch der bekannte Aufbau eines Elektromotors (US-A-4 110 644), bei dem beidseitige Lagerschilde, die Lager für den Anker bilden, mit dem Statorkern verklebt sind, und zwar mit Hilfe von Montageansätzen, die von den Lagerschilden ausgehen und bei ordnungsgemäßer Positionierung zum Stator paarweise ineinandergreifen. In dieser Position bildet sich durch die miteinander verbundenen Ansätze eine Öffnung von außen nach innen, durch welche ein Klebstoff eingespritzt werden kann, der die Lagerschilde untereinander und mit dem Stator verbindet.

Bei einer Verdrahtungsanordnung für den Motor eines Elektrowerkzeugs ist es bekannt (DE-A-35 38 940 oder auch die entsprechende EP-A-224 053), diesen in axialer Schichtung vom ventilatorseitigen Lagerschild ausgehend aufzubauen, wobei ein Schaltring, eine Kohlehalterplatte und ein Stanzgitter zusammen mit weiteren Bauteilen eine Baueinheit bilden, die in das in Form einer Lagerbrücke ausgebildete becherförmige Gehäuse des Motors eingesetzt wird. Diese Baueinheit dient zur Halterung der Kohlebürsten mit den Kohlehaltern, zur Aufnahme von Entstördrosseln und zur Bildung eines kombinierten Ein/Aus- und Rechts/Links-Schalters. Dabei kontaktieren spezielle vom Schaltring getragene Kontaktfedern Flachkontaktstellen des Stanzgitters in einer radialen Ebene, so daß durch die axiale Schichtung gleichzeitig auch der erforderliche Preßdruck für die Beine der Kontaktfedern erzeugt bzw. bei der anfänglichen Montage überwunden werden muß, denn der Kontaktdruck wirkt allgemein in der axialen Richtung. Notwendigerweise führt dies dann auch zu einem in axialer Richtung längeren Aufbau. Dabei ist das ebene Stanzgitter auf einer Seite der Kohlehalterplatte angeordnet, während sich die Kohlebürsten auf der anderen Seite der Kohlehalterplatte befinden. Durch senkrecht zur Hauptebene des Stanzgitters abgewinkelte Anschlußzungen ergeben sich Anschlußkontakte für die Feldwicklungen. Das Stanzgitter ist dabei als später getrennter Bandleiter aus Metall ausgebildet und mit der rotorseitigen Fläche der aus Kunststoff bestehenden Kohlehalterplatte verschweißt, verklebt oder auf sonstige Weise verbunden.

Schließlich ist es bei einer elektrischen Maschine bekannt (DE-A-35 29 208), einen aus Kunstharz geformten Bürstenhalter an einer Konsole fest anzubringen und diese Konsole in eine Öffnung eines Jochs einzusetzen, wobei die Konsole die Gestalt einer dünnen Platte aufweist und von beiden Seiten vom Kunstharz des Bürstenhalters so eingeklemmt ist, daß die Konsole einstückig mit dem Bürstenhalter ausgebildet ist.

Ferner ist es bei einem elektrischen Antriebsmotor bekannt (DE-A-31 49 106), den von einem Permanentmagneten gebildeten Stator von einem ringförmigen, einen magnetischen Rückschluß bildenden Blechstreifen zu umgeben, der beidseitig axial an Lagerträger angrenzt und mit diesen verbunden ist. Diese Lagerträger sind bügelförmig ausgebildet und nehmen je ein Wellenlager für die Rotorwelle auf. Eines dieser Wellenlager ist als Wälzlager ausgebildet, welches direkt in einer topfförmigen Einsenkung des Lagerträgers gehalten ist und über die Einsenkung um einen vorgegebenen Abstand nach außen ragt. Hierdurch ist es möglich, dieses zur Ankerwelle zwangsläufig absolut zentrisch liegende Lagerelement, nämlich im speziellen Fall den Außenring des Wälzlagers, zum Auffangen und Zentrieren einer an diesem Motor angeordneten weiteren Baugruppe, beispielsweise eines Getriebes, zu verwenden. Über die Möglichkeit einer elektrischen Verschaltung ist nichts ausgesagt; größerer Aufwand ist hier allerdings auch nicht erforderlich, da der Stator aus einem Permanentmagneten besteht.

Es ist ferner bekannt (US-A-4 613 781), bei einem elektrischen Motor auf einer Seite eine Endkappen-Montagegruppe anzuordnen, die ein Kunststoffteil umfaßt, in dessen Innerem eine Vielzahl streifenförmiger metallischer Leitungen eingebettet ist, die die elektrischen Verbindungen herstellen zwischen den Motorkomponenten und den Bürstenhaltern. Zu diesem Zweck ist jede elektrische Leitung, die mit einem Bürstenhalter Kontakt machen soll, um einen Basisbereich des Bürstenhalters herumgewickelt, wozu jeder Bürstenhalter an seiner Basis seitliche Flansche aufweist.

Ferner ist die Ausbildung des einzelnen Bürstenhalters so getroffen, daß eine Seitenwand schleifenartig abgebogen und so verlängert ist, daß sie nach Art eines Hakens unter die jeweilige Kohlebürste im Bürstenhalter greift und diese zu Montagezwecken im Abstand zum Kollektorring des Ankers zunächst halten kann. Anschließend, nämlich nach dem Zusammenbau, wird der Haken weiter nach außen gedrückt, wodurch die Kohle freikommt und die elektrische Kontaktgabe zwischen ihr und dem Kollektor des Elektromotors möglich ist.

Es ist ferner bei einer Baugruppe für einen Elektromotor bekannt (DE-GM G 85 20 258.4), eine aus Isoliermaterial bestehende und eine Schaltungsanordnung tragende Platte mit zentralem Ausschnitt zur Aufnahme des Kollektors eines Elektromotors vorzusehen und auf der Platte einander gegenüberliegend angeordnete einstückige Rahmenteile zur Halterung von mit der Schaltungsanordnung verbindbaren Bürsten so auszubilden, daß von seitlich neben den Rahmenteilen angeordneten Federhalterungen federnd vorgespannte Fortsätze der Federn in die Rahmenteile führen. Die Federn sind auf den Federhalterungen schraubenförmig aufgewickelt. Mindestens ein Teil der elektrischen Schaltungsanordnungen ist in die Kunststoffträgerplatte eingebettet.

Dieses Einbetten der zum Betrieb eines Elektromotors erforderlichen Verdrahtung mindestens in ihren wesentlichen Bestandteilen ist auch bekannt aus der DE-A-36 04 675, wobei ein isolierendes Bauteil die Leiterbahn in ihren wesentlichen Bestandteilen umschließt und gleichzeitig andere Bauelemente zum Betrieb des Motors lagert, beispielsweise Bürstenbrücken, die in das Bauteil ebenfalls integriert sind. Das Bauteil ist plattenförmig ausgebildet und weist eine zentrale Bohrung auf zur Ermöglichung des Durchtritts des Kollektors des Elektromotors.

Es ist auch bekannt (EP-A-02 24 054), bei einem Elektromotor für ein kleineres Elektrowerkzeug eine becherförmige Lagerbrücke so auszubilden, daß sie nach Art eines Teilgehäuses den in sie eingeschobenen Stator aufnimmt, in dessen Innerem wiederum der Rotor frei drehbar gelagert ist. Die Rotorwelle sitzt dabei auf der Seite der becherförmigen Lagerbrücke in einem Wälzlager, welches von der Lagerbrücke gebildet ist. Ferner verfügt die Lagerbrücke über Mittel zur Einund Ausschaltung, Feldstecker sowie einen Entstörkondensator. An der Lagerbrücke ist ein Kontaktgitter angeordnet, welches als Stanzgitter zum wahlweisen Anschließen von Drosseln, Umschaltern, Dioden und Widerständen ausgeführt ist. Das Stanzgitter liegt auf der dem Rotor zugewandten Seite einer Schalteranordnung. Hierbei ist ferner ein Schaltring vorgesehen, bei dessen Verdrehen verschiedene Kontaktgaben erfolgen können, beispielsweise zur Drehrichtungsumkehr oder Geschwindigkeitsreduzierung (Europäische Patentanmeldung 0 224 054).

Problematisch kann bei den bekannten Elektromotoren bzw. Bauteilen für diese der Umstand sein, daß zwar durch gewisse Einzelmerkmale vereinfachende Lösungen erreicht werden, dennoch hinsichtlich Aufwand an Einzelteilen, deren Zusammenfügen, Montage des Elektromotors wesentlich zu komplexe Strukturen vorliegen, insbesondere wenn man bedenkt, daß ein solcher Elektromotor auch Mittel aufweisen sollte, um ein Einund Ausschalten, vor allen Dingen aber auch ein Umschalten in der Drehrichtung zu ermöglichen. Gerade die Drehrichtungsumkehr ist aber mit einem erheblichen Schaltungsaufwand üblicherweise verbunden, so daß hier, aber auch bei der Lagerung der Bürsten und deren guter Kontaktgabe zu weiteren Schaltungsteilen, überhaupt in der ganzen Grundstruktur und dem Aufbau von Elektromotoren Probleme auftauchen, die insbesondere auch einer im wesentlichen automatisierten Montage und einer kostengünstigen Herstellung von Elektromotoren im Wege stehen.

Der Erfindung liegt daher die Aufgabe zugrunde, einen elektrischen Universalmotor zu schaffen, der mit nur wenigen Einzelteilen auskommt, eine hohe Dauerleistung abgeben kann, allen Ansprüchen an eine vereinfachte elektrische Verschaltung einschließlich Einund Ausschalter sowie Drehrichtungsumschaltung genügt und dennoch so ausgebildet ist, daß er auch auf automatischen Fertigungsanlagen herstellbar ist, ohne daß hierdurch Stabilität und vor allem die genaue Zentrierung des Rotors mit Bezug auf den diesen umgebenden Stator bzw. dessen Polschuhe leiden.

Vorteile der Erfindung

Die erfindung löst diese Aufgabe mit den Merkmalen des Anspruchs 1.

Vorteilhaft ist auch, daß die beidseitigen bügelförmigen, die Lagerung für die Ankerwelle aufnehmenden am Stator befestigten Lagerschilde in Form von Blechstücken gleichzeitig Kurzschlußringe bilden, so daß sich auch aus diesem Gesichtspunkt der bei einem solchen Universalmotor zu treibende Aufwand reduziert wird. Die Abkühlung einer eventuellen Lagererwärmung vollzieht sich großflächig, wobei durch die Stabilität des erfindungsgemäßen Elektromotors eine besondere Robustheit erzielt wird, die einen universellen Einsatz möglich macht.

Schließlich ermöglicht die Erfindung eine besonders gute Kontaktierung der Kohlebürsten mit den elektrisch leitenden Verbindungen innerhalb des Motors, wobei die erforderlichen Schaltungsanordnungen sowohl für das Ein- und Ausschalten des Motors als auch für eine Drehrichtungsumkehr innerhalb des Motors integriert sind.

Vorteilhaft ist schließlich die flächige Auflage der sämtliche elektrischen Verbindungen herstellenden Gitterform auf der ankerseitigen Trägerplatte, wobei die Bürstenhalter auf der metallischen Gitterform direkt großflächig aufliegen und mit Fortsätzen an dieser und an der Trägerplatte befestigt sind. Gehalten ist das Ganze dann von der direkt an der Innenseite des äußeren Lagerbügels anliegenden Halteplatte, die mit in Richtung auf den Rotor verlaufenden Vorsprüngen in die Trägerplatte eingreift und selbst den Schaltring lagert, der seinerseits wieder durch die von ihm gelagerten elastischen Federbügel Kontaktverbindungen zur Stanzgitterform herstellt.

Zeichnung

Ein Ausführungsbeispiel der Erfindung ist in der Zeichnung dargestellt und wird in der nachfolgenden Beschreibung nähert erläutert. Es zeigen:

Fig. 1
eine Ausführungsform eines elektrischen Universalmotors im Längsschnitt, jedoch ohne ein zusätzliches gegebenenfalls vorhandenes umschließendes Gehäuse und

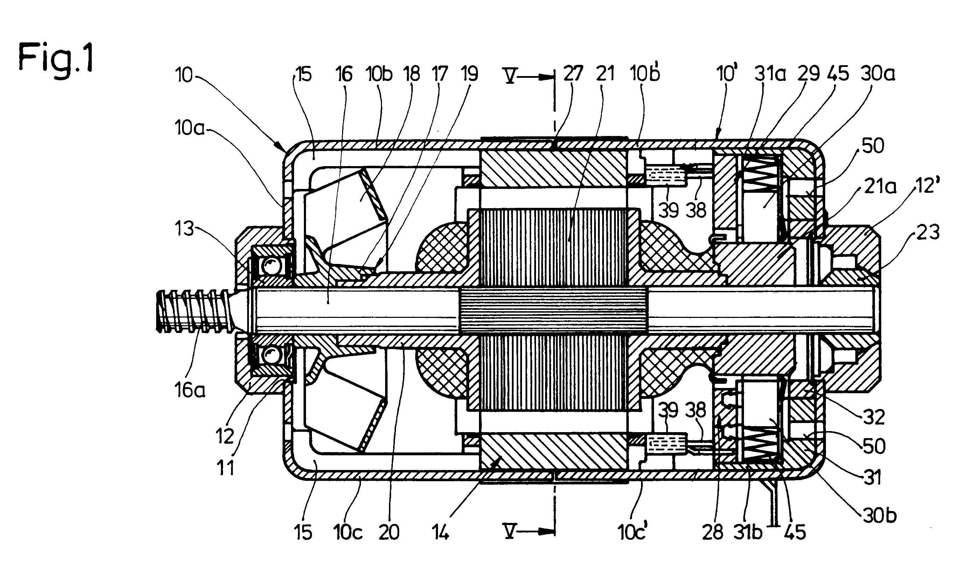

Fig. 2
ebenfalls einen Längsschnitt durch den erfindungsgemäßen Universalmotor in einer um 90° gegenüber der Darstellung der Fig. 1 gedrehten Ansicht;

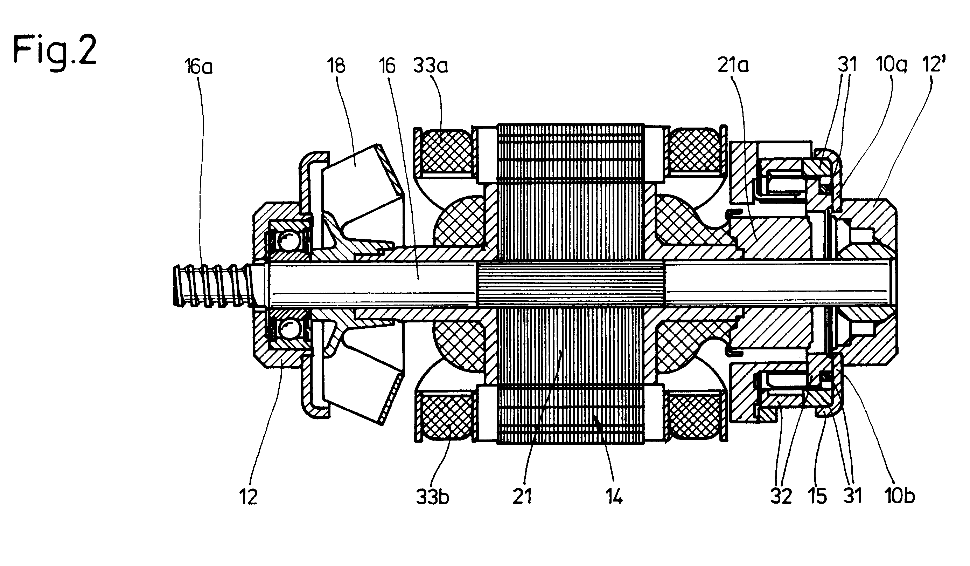

Fig. 3
den gleichen Universalmotor entsprechend Fig. 1 und Fig. 2 in einer Draufsicht von oben bei teilweise weggeschnittenen Teilen;

Fig. 4
den Universalmotor der Fig. 1 in einer Ansicht von rechts;

Fig. 5
einen Querschnitt längs der Linie V-V der Fig.1, schematisiert und mit teilweise weggelassenen Teilen;

Fig. 6
schematisiert eine Draufsicht auf die Gitterform (Stanzgitterform) der elektrischen Verdrahtung innerhalb des Universalmotors mit an dieser angeordneten Bürstenhaltern und zugeordneten Schaltbügelträgern zur Bewirkung elektrischer Umschaltungen, während die

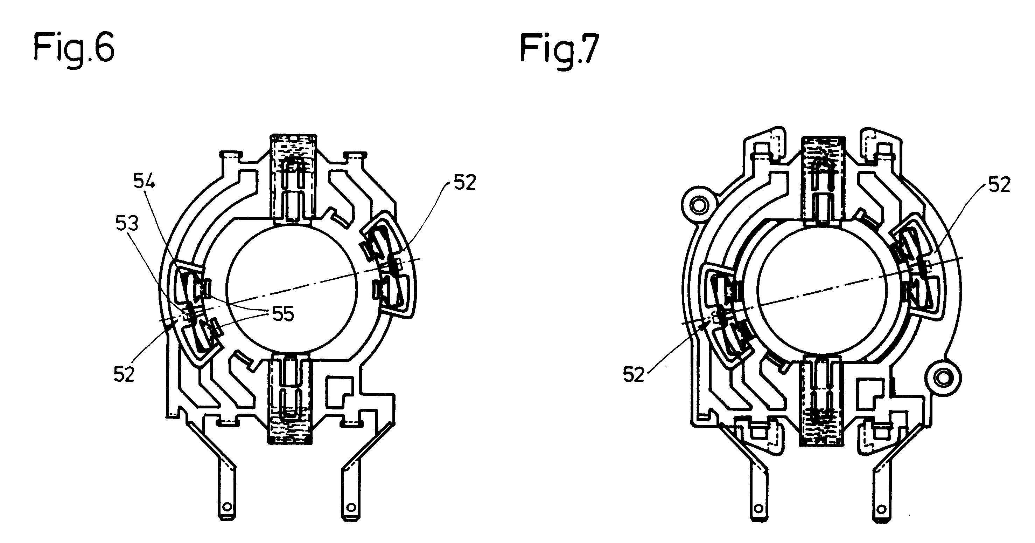

Fig. 7
die gleiche Darstellung der Fig. 6 zeigt, jedoch aufgelegt und befestigt an einer dahinter, im zusammengebauten Zustand auf den Rotor gerichteten Trägerplatte; die

Fig. 8 und 9

zeigen einen der beiden äußeren, beidseitigen Lagerbügel des Universalmotors im Schnitt sowie in einer Ansicht von vorn, die

Fig.10 und 11
zeigen die kollektorseitige, die Gitterform der elektrischen Verdrahtung fixierende Trägerplatte in einer Draufsicht und einer Seitenansicht, während die

Fig.12 und 13
die Gitterform der elektrischen Verdrahtung als Stanzgitterform in Draufsicht und einer Seitenansicht zeigen, die

Fig.14 und 15
zeigen in Draufsicht und einer seitlichen Schnittdarstellung die kollektorseitige, unmittelbar an den zugeordneten Lagerbügel angrenzende Halteplatte und die

Fig. 16 und 17
zeigen in Draufsicht und seitlicher Schnittdarstellung eine mögliche Ausführungsform eines Schaltrings, der in die Halteplatte eingreift und in dieser gelagert ist und mit Schaltbügelträgern Kontaktverbindungen im Bereich der Gitterform der elektrischen Verdrahtung herstellt, die

Fig.18 und 19
zeigen eine mögliche Ausführungsform eines Bürstenträgers in Draufsicht und seitlicher Schnittdarstellung, wie er an der Gitterform der elektrischen Verdrahtung sowie an der dahinterliegenden Trägerplatte zu befestigen ist und die

Fig. 20
zeigt schließlich in ihren verschiedenen, Kontaktunterbrechungen bildenden Ausstanzungen bestimmung bzw. -änderung sowie Ein- und unterschiedliche Verschaltungen für Drehrichtungs-Ausschalten.

Beschreibung der Ausführungsbeispiele

Der Grundgedanke vorliegender Erfindung besteht darin, einen leistungsfähigen, aus nur wenigen Einzelteilen aufgebauten, daher unkomplizierten, kompakten Elektromotor für beliebige Antriebe zu schaffen, der in seiner axialen Schichtung der einzelnen Komponenten mit besonderem Vorteil problemlos auch auf vollautomatischen Fertigungsanlagen hergestellt werden kann. Dabei wird einem robusten unkomplizierten Aufbau mit einfachen Montagemöglichkeiten bewußt der Vorzug gegenüber Wartungsfreundlichkeit und der Möglichkeit des Ersatzes von Verschleißteilen eingeräumt, so daß eine bevorzugte Ausführungsform vorliegender Erfindung im Montagebereich darin besteht, daß der Zusammenbau durch Verkerbungen, Umbördeln u. dgl. endgültig ist. Ein Ersatz des gesamten Aggregats anstelle einer Reparatur erweist sich daher unter Zugrundelegung der erfindungsgemäßen Konzeption als für den Verbraucher wesentlich kostengünstiger und weniger aufwendig. Dabei gelingt es der erfindungsgemäßen Konzeption, auch so problematische Gesichtspunkte wie einwandfreie und gleichmäßige Luftspaltbildung (Zentrierung), Wärmeabfuhr im Bereich hochbelasteter Komponenten (Lager) und das Einführen des Rotors mit Kollektor bei zunächst zurückgehaltenen Kohlebürsten im automatischen Ablauf in den Griff zu bekommen, wobei durch ein einfaches Einführen von Montagestiften nach dem vollständigen Zusammenbau des Motors an vorgegebenen Stellen genügt, um die Kohlebürsten aus ihrer Bereitschaftsposition in die Arbeitsposition zu überführen.

Die folgende Erläuterung bezieht sich auf ein spezielles Ausführungsbeispiel, welches sich in dieser Ausführungsform als besonders geeignet erwiesen hat.

Der Grundaufbau des in den Fig. 1-3 in zusammengebautem Zustand gezeigten elektrischen Universalmotors ist in seiner axialen Schichtung so getroffen, daß in der Zeichenebene von links nach rechts beginnend zunächst das A-Lagerschild in Form eines ersten Lagerbügels 10 angeordnet ist, welches in einer zentralen Bohrung 11 seiner plattenförmigen Rückfläche 10a einen ersten topfförmigen Lagereinsatz 12 aufnimmt, der dann seinerseits wieder das jeweils vorgesehene Lager, in diesem Fall ein Wälz- oder Kugellager 13 in geeigneter Form, beispielsweise im Preßsitz sichert. Der Lagereinsatz 12 ist in seiner Aufnahmebohrung 11 bündig eingesetzt und durch Verkeilen, Verklemmen, Umbördeln, Verstemmen, Einkerbungen o. ä. Techniken gesichert, also durch Arbeitsvorgänge, die auch vollautomatisch durchgeführt werden können und die auf jeden Fall bei bündigen Endmaßen sicherstellen, daß sich hier die gewünschten Zentrierungs- und Stabilitätssicherheiten ergeben.

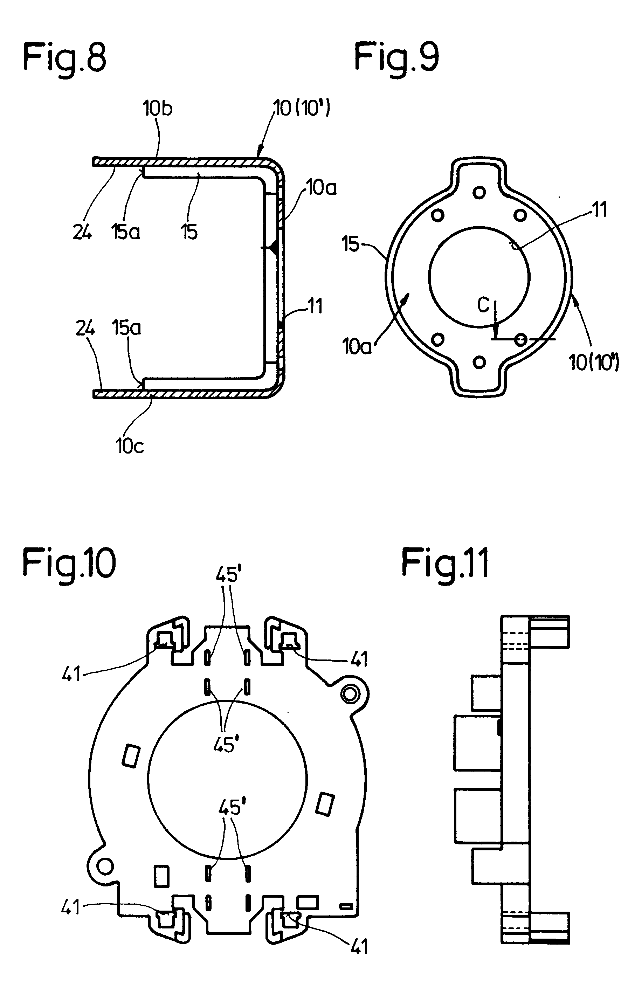

Die Form des Lagerbügels 10 sowie des auf der anderen Seite als B-Lagerschild angeordneten, vorzugsweise identischen Lagerbügels 10′ ist wie in den Figuren 8 und 9 im einzelnen gezeigt; von der plattenförmigen Rückfläche 10a gehen in der Darstellung der Fig.1 nach oben und unten Vorsprünge 10b, 10c ab, die in Richtung auf den zentralen Ständer oder Stator 14 abgebogen sind, so daß sich insgesamt eine bügelförmige Form jedes Lagerbügels 10, 10′ ergibt. Vorzugsweise ist jeder Lagerbügel 10, 10′ aus Stanzblech entsprechender Dicke hergestellt und mit Verrippungen versehen; das bevorzugte Ausführungsbeispiel der Fig. 8 und 9 zeigt, daß die Grundplatte 10a einen umlaufenden Randwulst 15 aufweist, der sich in die beidseitigen Bügel 10b und 10c fortsetzt, so daß diese selbst wieder im Querschnitt eine U-Form aufweisen. Eine solche Bauform sichert höchste Stabilitätswerte.

Das Lager 13 nimmt das hier auf dieser Seite durchgeführte Wellenende der Rotor- oder Ankerwelle 16 auf, die in einem nach außen herausgeführten Wellenstummel 16a endet, der dem Abtrieb der erzeugten Leistung dient und eine Keilverzahnung oder ähnliche Mittel aufweisen kann, um beispielsweise ein Ritzel aufzubringen.

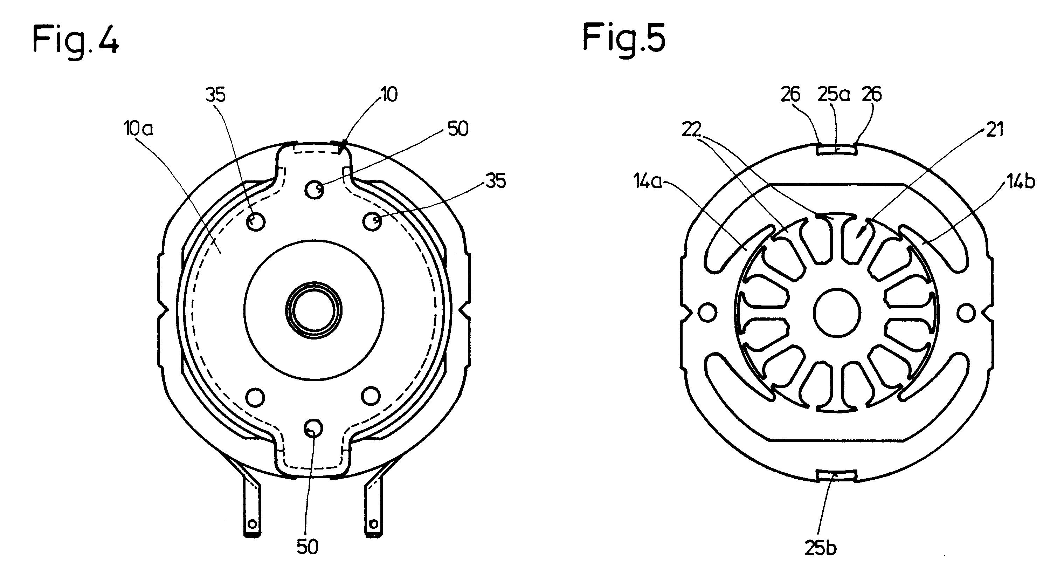

Nach innen lagert die Ankerwelle 16 drehfest das Lagerteil 17 des Ventilators 18, wobei das Lagerteil 17 über eine bei 19 gezeigte, zahnartige Eingriffsmöglichkeit drehfest mit der Ankerlagerung bzw. einem Ankerlagerrohr 20 verbunden ist. Auf den speziellen Aufbau des Ankers 21 braucht nicht weiter eingegangen zu werden, da dieser von konventioneller Form sein kann und, wie die Darstellung der Fig. 5 in der unbewickelten Form zeigt, aus einer vorgegebenen Anzahl von Polschuhen 22 besteht, denen über vorgegebene Kreissegmente sich einander gegenüberliegende beidseitige Statorpolschuhe 14a, 14b gegenüberliegen.

Die Ankerwelle 16 setzt sich bis zum gegenüberliegenden Lagerbügel 10′ fort, in dessen zentrale Bohrung ebenfalls ein Lagereinsatz 12′ angeordnet ist, der in diesem Fall ein Kalottenlager 23 aufnimmt.

Da die Lagereinsätze mit identischen Außenformen ausgebildet sind, besteht hierdurch die Möglichkeit, in beliebiger Weise das jeweils gewünschte Lager in der jeweils gleichen Aufnahmebohrung 11 des entsprechenden Lagerbügels 10, 10' je nach Wunsch und den technischen Erfordernissen unterzubringen. Auch dieser Lagereinsatz 12' ist durch Umbördeln, Verstemmen, Einkerbungen o. dgl. befestigt.

Die beiden stabilen und kräftigen Lagerbügel 10, 10' greifen mit ihren U-förmigen Fortsätzen oder Bügeln 10b, 10c bzw. 10b', 10c' direkt in eine sie aufnehmende Lagernut des Statorpakets 14 ein; mit anderen Worten, die Fixierung der beidseitigen, die Lager 13, 23 für die Ankerwelle 16 tragenden Lagerbügel 10, 10' erfolgt ohne zusätzliche Zwischenelemente, Zwischenträger, Gehäusemittel o. dgl. unmittelbar an dem Teil, nämlich dem Statorpaket, welches dann auch durch die Präzision der Lagerpositionierung die gleichmäßige und geringe Luftspaltbildung zum von der Welle 16 getragenen Rotor bzw. dessen Polschuhen aufweisen muß.

Um hier hochgenau und spielfrei positionieren zu können, sind daher die auf den Stator und dessen Aufnahmenut oben und unten gerichteten Bügel 10b, 10c, 10b', 10c' dort, wo sie auf die Nut auftreffen und in diese eindringen, bis zur Anschlagstelle von der beidseitigen, deren U-Form vervollständigenden Randkante 15 frei, wie dies die kurzen Fortsätze 24 in Fig. 8 zeigen.

Es ist daher möglich, diese Fortsätze 24 so weit in die oberen und unteren Statornuten 25a, 25b einzuschieben, bis die von der Randkante 15 gebildete Anschlagkante 15a außen an das Statorpaket anschlägt und ein weiteres Einschieben verhindert. Auch dies trägt entscheidend zur Möglichkeit einer automatischen Montage bei, da nach dem Einschieben der Fortsätze 24 bis zum Anschlag deren fester Sitz in den Nuten 25a, 25b durch weitere geeignete, von außen durchzuführende mechanische Maßnahmen gesichert werden kann, beispielsweise Verstemmen, Einbördeln, durch Einkerbungen u. dgl.

Die Statornuten 25a, 25b für die Fortsätze 24 sind oben und unten direkt in das Material der Statorbleche eingearbeitet, wie die Darstellung der Fig. 5 zeigt, wobei die Nuten nach oben mindestens teilweise von leicht vorspringendem, randseitigem Material 26 noch überdeckt sein können, so daß die aufgenommenen Fortsätze 24 allseitig gesichert und fixiert sind. Die Statorbleche werden sofort in dieser Form mit Nuten versehen gestanzt.

Damit die Anschläge 15a an den Lagerbügeln die Einführtiefe der Fortsätze 24 in das Statorpaket vorgeben können, sind die Fortsätze 24 der beidseitigen Lagerbügel 10, 10′ geringfügig kürzer als die gesamte Dicke des Statorpakets, so daß zwischen ihnen im zusammengebauten Zustand ein wenn auch geringer Spalt 27 vorhanden ist. Es ist offensichtlich, daß durch das Anliegen der Anschlagkanten 15a neben der Anschlagwirkung natürlich noch eine zusätzliche Stabilisierungswirkung resultiert, da sich diese Randkante nach dem Einführen und Verstemmen oder Verkerben o. dgl. zusätzlich am Statorpaket gegen ein mögliches Verwinden oder Abkanten abstützt.

Nach rechts in der Zeichenebene der Fig. 1-3 schließt sich dann der Kollektorbereich mit den auf dem Kollektor gleitenden Kohlenbürsten an; hier ist eine merkliche axiale Schichtung der beteiligten Komponenten gebildet, allerdings nicht durch Einarbeiten oder Einbetten, Anschrauben, Anlöten o. dgl., sondern lediglich durch einen auch von Automaten herstellbaren, stapelnden Eingriff, also ein Aufeinanderbringen und Aufeinanderlegen der einzelnen Teile.

Im einzelnen ist angrenzend zum Rotor eine Trägerplatte 28 vorgesehen, an die sich eine plattenartige Gitterform 29 für die elektrische Verdrahtung anschließt, die auch als Stanzgitter bezeichnet werden kann. Auf dem Stanzgitter und falls gewünscht gleichzeitig auch auf der Trägerplatte 28 sind einander gegenüberliegend Bürstenhalter 30a, 30b befestigt; ferner schließen sich dann in der Zeichenebene nach rechts noch eine Halteplatte 31 an, die in einer inneren Bohrung einen Schaltring 32 aufnimmt. Der Schaltring wirkt mit Schaltbügelträgern bis zur Gitterform der elektrischen Verdrahtung ein, um dort Umschaltungen vornehmen zu können; die Halteplatte 31 verfügt über Vorsprünge 31a, 31b, von denen in Fig. 1 zwei gezeigt sind, die axial zurückgreifen und sich bis zur Trägerplatte 28 erstrecken und diese durch geeignetes Übergreifen aufnehmen, sichern und halten.

Es versteht sich, daß die jeweils hier angesprochenen flächigen Elemente der axialen Hauptschichtung, also Trägerplatte 28, Gitterform 29 der elektrischen Verdrahtung, Halteplatte 31 und plattenförmiger Schaltring 32 je nach der Schnittebene unterschiedliche Konfigurationen zeigen, was hauptsächlich darauf zurückzuführen ist, wie diese mittels Vorsprüngen und Durchbrechungen ineinandergreifen und ihre sich gegenseitig unterstützenden Funktionen erfüllen. Hierauf kommt es im grundsätzlichen nicht an; bevorzugte Ausführungsformen dieser plattenförmigen Komponenten sind in den nachfolgenden Figuren im einzelnen erläutert und dargestellt.

Aus der um 90° gedrehten Form der Darstellung der Fig. 2 ist klar erkennbar, daß die beidseitigen Lagerbügel 10, 10′ von ihrer jeweiligen Grundplatte 10a ausgehend nur mit schmalen bügelartigen Fortsetzungen zum Stator reichen, was dennoch für eine völlig hinreichende Stabilität sorgt, andererseits aber beliebige Einbaumöglichkeiten des Motors freistellt, auch dessen zusätzliche Umhüllung mit einem beispielsweise aus einem dünnen topfartigen Blechzylinder bestehenden Gehäuse oder mit Hilfe von abdeckenden Kunststoffen o. dgl. Diese können beispielsweise über Fixierschrauben an den Lagerbügeln oder am Stator befestigt werden. Hierauf braucht nicht weiter eingegangen zu werden, da solche äußeren Gehäuseformen je nach Anwendungszweck ausgesucht und in der Form vorgegeben werden können.

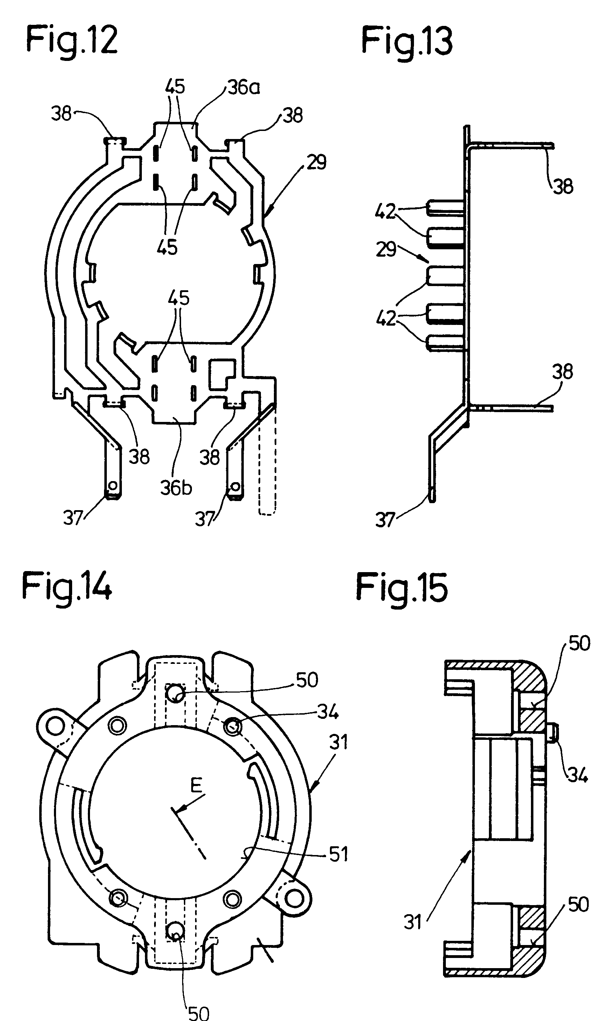

Die Fig. 2 zeigt bei 33a, 33b noch die Statorwicklungen, und sie zeigt auch genauer, daß in dieser gedrehten Darstellung, also in einer Darstellung, wo die Anordnung der Bürstenträger ein Übergreifen nicht mehr stört, der Schaltring 32 axial vorspringend in Richtung auf die Stanzgitterform geführt ist und hierbei lagernd von der Halteplatte aufgenommen ist. Man erkennt aus der Darstellung der Fig. 2 ferner, wie die Grundplatte 10a die Halteplatte 31 mit ihrer hochgezogenen Randkante 15 umgibt und topfförmig aufnimmt und hierdurch gleichzeitig sichert, wobei eine Verdrehsicherung ferner noch erzielt wird durch an der Halteplatte nach hinten, also in Richtung auf den Lagerbügel 10′ wegstehende Noppen 34, die in entsprechende Bohrungen 35 eingreifen (s. Figuren 14,15 in Verbindung mit Fig. 4). Hierdurch kann dann die so gesicherte Halteplatte 31 die anderen Schichtkomponenten 28, 29 und 32 im Kollektorbereich des Motors sichern.

Die die elektrische Verdrahtung sichernde Gitterform 29 ist in Fig. 12 und 13 dargestellt; man erkennt, daß es sich um ein flaches Stanzgitter handelt, welches die elektrischen Leitungen in Form metallischer flacher Bänder und größerer Teilstücke bildet, wobei von der Plattenform des Gitters nach beiden Seiten ausgehend Anschlußkontakte bzw. Schaltkontakte, durch Abbiegungen gebildet, vorspringen.

Entsprechend den Fig. 12 und 13 weist die Gitterform 29 zwei größere Flächenteile 36a, 36b auf, die in ihrer Grundfläche mindestens so groß sind wie die auf sie aufzusetzenden, in den Figuren 18 und 19 gezeigten Bürstenhalter. Über Querstege und Flachbänder, die insgesamt nicht bezeichnet sind, da sie in ihrer Lage ja beliebig angeordnet werden können, sind die Bürstenhalter-Lagerflächen 36a, 36b je nach der gewünschten Verschaltung mit Statoranschlüssen bzw. letztendlich mit den beiden Außenanschlüssen 37 verbunden, die aus der Flachform des Gitters durch mehrmaliges Abbiegen gebildet sind.

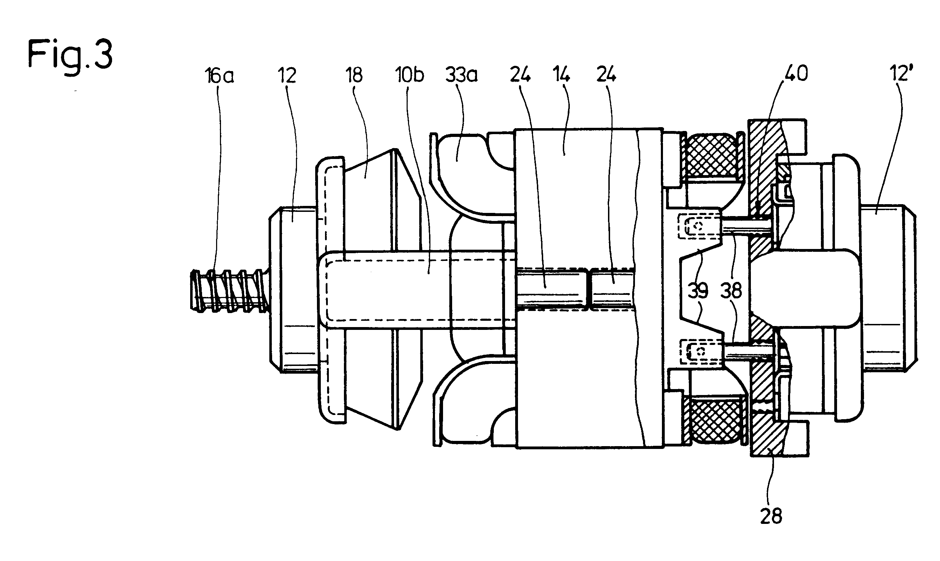

Ferner weist die Gitterform 29 bei dem dargestellten Ausführungsbeispiel vier erste Längskontakte oder Terminals 38 auf, die entsprechend der Darstellung der Fig. 1 bzw. Fig. 3 durch die Trägerplatte hindurch und in zugeordnete Aufnahmebuchsen 39 eingeführt sind, die vom Stator ausgehen und entsprechend von zum Statoraufbau gehörendem Kunststoffmaterial vorgeformt sind. Man bekommt durch diese Terminals 38, die in die Aufnahmebuchsen 39 eingeführt und gesichert werden können, auch eine gute Positionierung und Sicherung des Schichtaufbaus zum Stator zusätzlich zu der Halteplattenwirkung. Dabei erkennt man aus der Darstellung der Fig. 3 bei 40, daß im Durchführungsbereich durch die Trägerplatte 28, die an dieser Stelle vorgeformte Durchtrittsöffnungen 41 bildet (s. Fig. 10), daß die Kontaktzungen oder Terminals 38 beidseitig Verzahnungen oder Außenhaken, jedenfalls Vorsprünge aufweisen, mit welchen sie sich in den Durchführungsöffnungen 41 der Trägerplatte 28 fest und unverrückbar verankern. Hierdurch ergibt sich ein erster Beitrag zu einem festen Sitz der Gitterform 29 an der Trägerplatte 28, die ansonsten auf die Trägerplatte 28 lediglich aufgelegt, nicht in diese eingearbeitet oder eingebettet ist. Diese Terminals 38 dienen der Herstellung der elektrischen Verbindungen zwischen Bürsten und Statorwicklungen 33a, 33b bzw. zu den Außenanschlüssen 37.

Die Gitterform 29 der elektrischen Verdrahtung bildet ferner, nach der anderen Seite mit Bezug auf die Terminals 38 abgebogen und daher in dieser Richtung (also in Richtung auf den Schaltring 32) vorspringend Schaltzungen 42 aus, die der Herstellung diverser Umschaltungen in der Drehrichtung bzw. Ein- und Ausschaltungen dienen und auf die weiter unten in Verbindung mit dem Schaltring noch eingegangen wird.

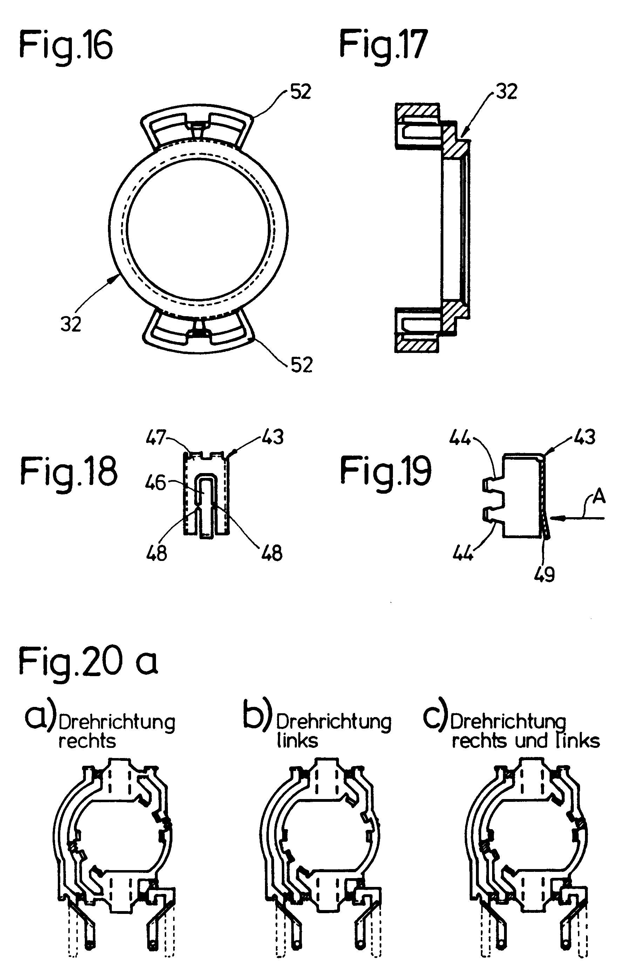

Art, Aufbau und Befestigung der Bürstenhalter 43 ist in den Figuren 18 und 19 gezeigt. Jeder Bürstenhalter weist eine durch Abbiegungen eines Zuschnitts gebildete Kastenform auf, wobei aber der Boden fehlt, da dieser von den Bürstenhalter-Lagerflächen 36a, 36b der Gitterform 29 gebildet ist. Ferner fehlt eine (untere) Seite, an welcher die nichtdargestellte Kohlebürste aus dem Bürstenhalter austritt. Wie die Figur 19 zeigt, weisen beide Seitenwände nach unten über die Endkante weitergeführte Verrastungszapfen 44 auf, die von beliebiger Form sein können, beispielsweise schwach konisch zulaufend und beidseitig vorzugsweise Rastzähne oder Haken aufweisen. Mit diesen flachen Verrastungszapfen wird jeder Bürstenhalter zunächst auf die zugeordnete Bürstenhalter-Lagerfläche 36a, 36b der Gitterform 29 aufgesetzt und eingeführt, wobei die Verrastungszapfen 44 durch entsprechende Durchführungsschlitze 45 in jeder Lagerfläche geführt sind. Da die Gitterform flach auf der in den Fig. 10 und 11 gezeigten Trägerplatte aufliegt, weist diese ebenfalls entsprechend ausgerichtete Aufnahmeschlitze 45′ auf, in die die Verrastungszapfen der Bürstenhalter 43 unter Druck eingeführt werden und eine sichere Verankerung in dem Kunststoffmaterial der Trägerplatte finden. Hierdurch wird zweierlei erreicht. Erstens ergibt sich auf diese Weise eine besonders breite Kontaktierungsfläche der Bürstenhalter 43 zu ihrer Lagerfläche auf der Gitterform, wobei diese Lagerfläche dann gleichzeitig eine der Bürstenhalterwände bildet, so daß die in jedem Bürstenhalter befindliche Kohlebürste allseitig von elektrisch leitendem Material (Bürstenhalter und Gitterform bestehen bevorzugt aus einer gut leitenden Messinglegierung o. dgl.) umgeben sind.

Nach oben stützen sich die Kohlebürsten dann unter Vorspannung an innerhalb der Bürstenhalter 43 eingelegte Vorspannungsfedern 45 (s. Fig. 1) ab. Es ist daher nicht erforderlich, außerhalb der Bürstenhalter Vorspannungsfedern mit eigenen Federhaltern u.dgl. anzuordnen.

Der zweite Vorteil, der hierdurch erreicht wird, besteht darin, daß durch das Auftreffen und Verankern der Bürstenhalter 43 in der Trägerplatte 28 natürlich die dazwischenliegende Gitterform 29 ebenfalls in diesem Bereich fest an die Trägerplatte gepreßt und mit dieser weiter verbunden wird, wobei es natürlich möglich ist, je nach Wunsch aus der Gitterform selbst noch entsprechende weitere flache gezahnte Verrastungszapfen abzubiegen und als primäre Verankerungsmittel zur Trägerplatte zu benutzen.

Durch die Klemmverbindung mit den zugeordneten, am Stator 14 fest gelagerten und stationären Aufnahmebuchsen 39 des Stators ergibt sich auf diese Weise schon eine sichere und unverrückbare Lagerung der Trägerplatte 28 mit an ihr befestigter Gitterform 29 der elektrischen Verdrahtung sowie der Bürstenhalter 43.

Auf eine weitere vorteilhafte Eigenart der Bürstenhalter 43 soll an dieser Stelle gleich eingegangen werden.

Da es bei der vorzugsweise automatischen Montage unmöglich ist, den Kollektor 21a in den Kohlebürstenbereich bei unter Federvorspannung aus ihren Bürstenhaltern 43 herausgedrückten Kohlebürsten einzuführen, verfügen die Bürstenhalter, wie an sich im Grundsatz schon bekannt, über Verriegelungsmittel, die die Kohlebürsten so lange zurückhalten, bis nach fertiger Montage das federvorgespannte Auffallen auf den Kollektor freigegeben werden kann.

Bei dem hier dargestellten Ausführungsbeispiel entsprechend den Fig. 18 und 19 in Verbindung mit Fig. 1 verfügt eine Seitenwandung jedes Bürstenhalters 43, und zwar die Seitenwandung, die nach der Montage in Richtung auf die äußere Halteplatte blickt, über eine durch Ausstanzung gebildete Wippe 46, die als Teil dieser Seitenwand 47 eine zungenartige Form aufweist und mit der Seitenwand nur noch über zwei mittlere schmale beidseitige Querstege 48 verbunden ist. Ferner ist der untere, an die Kohlebürsten-Austrittsöffnung angrenzende Teil der Wippe 46 noch mit einem einwärts gebogenen Haken 49 versehen. Bringt man daher auf die Wippe zunächst eine Kraft entsprechend dem Pfeil A in Fig. 19 zur Einwirkung, nachdem man als erstes die Vorspannungsfeder 45 und anschließend die nicht dargestellte Kohlebürste in den auf der Gitterform und der Trägerplatte montierten Bürstenhalter 43 eingeführt hat, dann verschwenkt die Wippe 46 und der Haken 49 hintergreift die nach außen drückende Kohlebürste und hält diese gegen ihre Vorspannung fest.

In diesem Zustand kann dann die weitere Montage erfolgen, nämlich Einlegen des Schaltrings 32 in die Halteplatte 31 und Aufsetzen des diesseitigen Lagerbügels 10', bzw. wenn man zunächst in den Lagerbügel 10' einschichtet, zunächst Einsetzen der Halteplatte 31 in den Lagerbügel 10', anschließend Einführen des Schaltrings, anschließendes Aufschieben der vormontierten Teilkomponente aus Trägerplatte 28 mit Gitterform 29 und daraufmontierten Bürstenhaltern. Anschließend erfolgt dann das Einschieben dieses Lagerbügels 10' in die Führungsnuten am Stator, wie weiter vorn schon erläutert.

Die Montage des Universalmotors ist auf diese Weise schon beendet, wobei dann noch die Notwendigkeit besteht, die Kohlebürsten aus ihrer Arretierung freizudrücken.

Hierzu sind, wie am besten der Darstellung der Fig. 1 in Verbindung mit Fig. 4 und Fig. 14 entnommen werden kann, oben und unten Durchtrittsbohrungen 50 in der Grundplatte 10a des Lagerbügels 10' und der Halteplatte 31 vorgesehen, die so ausgerichtet sind, daß man nunmehr auf den oberen Teil der Wippe 46 durch problemloses Einführen von zwei axialen Zapfen in die Bohrung 50 drücken kann, wodurch die Wippe in ihre in der Zeichnung dargestellte Position mit zurückgezogenem unteren Haken 49 gelangt und die Kohlebürsten freigibt.

Die Fig. 16 und 17 zeigen den Schaltring 32 genauer, der mit einer Abschulterung in die zentrale Aufnahme und Durchtrittsöffnung 51 der Halteplatte 31 so verdreht eingesetzt ist, daß von ihm ausgehende radial nach außen und axial in Richtung auf die Gitterform der elektrischen Verdrahtung vorspringende einander gegenüberliegende Schaltbügelträger 52 jedenfalls um den gewünschten Verdrehwinkel für die Bewirkung von Umschaltungen frei beweglich sind.

Die Fig. 6 und 7 zeigen, daß die Schaltbügelträger 52, die von einer beidseitig symmetrischen, hakenförmigen Form sind, mit einem mittleren Halteteil 53 eine beidseitig ähnlich abgebogene Schaltkontaktfeder 54 aufnehmen bzw. lagern, wobei die Befestigung so getroffen sein kann, daß die Schaltkontaktfeder 54 mit ihrem mittleren Teil in einen Aufnahmeschlitz im Halteteil 53 des Schaltbügelträgers unter Druck eingeschoben und dann mittels geeigneter zahnartiger Vorsprünge verrastet worden ist.

Die beiden hakenartigen, nach innen wieder abgebogenen Kontakte 55 jeder Schaltkontaktfeder weisen einen solchen Abstand auf, daß sie immer zwei der Schaltzungen 42, die von der Gitterform 29 in Richtung auf den Schaltring und dessen Schaltkontaktträger vorspringen, bei dem dargestellten Ausführungsbeispiel von außen kontaktieren und damit elektrisch miteinander verbinden. Es werden bei diesem Ausführungsbeispiel daher jeweils nur zwei der Kontaktzungen 42 miteinander verbunden; die Erfindung ist hierauf natürlich nicht beschränkt, sondern kann mehr oder weniger Kontaktzungen und mehr oder weniger diese miteinander verbindende oder den Stromfluß unterbrechende Schaltkontaktfedern am Schaltring vorsehen.

Bei dem dargestellten Ausführungsbeispiel lassen sich entsprechend den in Fig. 20 dargestellten Varianten durch unterschiedliches Ausstanzen von durch schraffierte Flächen dargestellten Brücken bestimmte Drehrichtungen vornehmen oder Drehrichtungsänderungen durch Verdrehen des Schaltringes gewinnen; hierbei sind auch Ein-oder Ausschaltungen möglich.

Bei der in Fig. 20 bei a) dargestellten Stanzart der Gitterform ergibt sich eine vorgegebene Stromflußrichtung in der Abfolge, wie die Bürstenhalter über ihre zugeordneten Bürstenhalterlagerflächen in den Stromlaufplan zu den vier Anschlußbuchsen der Statorwicklungen geschaltet sind; in Fig. 20 bei b) ist dies umgekehrt, so daß sich einmal die Drehrichtung rechts und einmal die Drehrichtung links ergibt, während die Stanzform der Fig. 20 bei c) beliebige Drehrichtungen ermöglicht, je nachdem, wie am Schaltring manipuliert wird, welche der Zungen 42 also miteinander überbrückt werden. Dies ist für Rechtslauf (R) und Linkslauf (L) in der Zeichnung angegeben.

Die Fig. 6 und 7 zeigen die Gitterform der elektrischen Verdrahtung mit an ihr angeordneten Bürstenhaltern und den vom Schaltring kommenden, angedeuteten Schaltbügelträgern (Fig. 6); während die Fig. 7 die Gesamtheit dieses Aufbaus zeigt, aufgelegt und durch die durchgeführten Verrastungszapfen befestigt an der darunterliegenden Trägerplatte.

**Patentansprüche**

1. Elektrischer Universalmotor für beliebige Antriebe, insbesondere Elektrohandwerkzeuge, Büromaschinen, motorisch angetriebene Gartenwerkzeuge u. dgl., mit Stator und Statorwicklungen, drehbar gelagertem Anker (21) mit Kollektor (21a), Kohlebürsten und Kohlehalterungen sowie beidseitigen, die Lagerung für die den Anker (21) tragende Welle (16) bildenden Lagerschilden, wobei die beidseitigen Lagerschilde unter Bildung von Lagerbügeln (10, 10') bügelförmig ausgebildet und mit Fortsätzen bis zum Statorpaket (14) geführt und mit diesem direkt verbunden sind und beide Lagerbügel (10, 10') zentrale Bohrungen (11) für die Aufnahme von Lager (13, 23) für die Ankerwelle (16) enthaltenden Lagereinsätzen (12, 12') aufweisen, dadurch gekennzeichnet, daß in axialer Schichtung vom ventilatorseitigen Lagerschild ausgehend und in dieser Reihenfolge sich an den Anker anschließend eine erste Trägerplatte (28), eine auf dieser aufliegende und an ihr befestigte, die elektrische Verdrahtung bildende Stanzgitterform (29) mit ihr zugeordneten Bürstenhaltern (43) und darauffolgend eine Halteplatte (31) angeordnet sind, daß angrenzend zur Halteplatte (31) und in einer Bohrung derselben drehbar angeordnet ein Schaltring (32) aufgenommen ist, daß die Stanzgitterform (29) von einer ausgestanzten Scheibe aus elektrischem Material mit flachbandähnlichen, über (ausstanzbare) Brücken verbundenen Leitungen besteht, wobei von der Stanzgitterform (29) nach beiden Seiten Anschlußkontakte (38, 42) ausgehen, die einerseits direkt elektrische Anschlüsse im Stator kontaktieren und andererseits auf den Schaltring (32) gerichtet sind.

2. Elektrischer Universalmotor nach Anspruch 1, dadurch gekennzeichnet, daß erste Anschlußkontakte die Trägerplatte (28) durchsetzen und in Form von Terminals (38) mit den Anschlüssen des Stators verbunden sind, während die in axialer Gegenrichtung von der Stanzgitterform (29) ausgehenden Anschlußkontakte in Form von Schaltzungen (42) Umschaltkontakte für den Schaltring (32) bilden.

3. Elektrischer Universalmotor nach Anspruch 1 oder 2, dadurch gekennzeichnet, daß die Stanzgitterform (29) Kohlebürstehalterungen (43) elektrisch leitend lagert und vom Schaltring (32) axial auf die Stanzgitterform (29) gerichtete Schaltbügelträger (52) mit Schaltkontaktfedern (54) ausgehen, die je nach Position des Schaltrings entsprechende Schaltzungen (42) elektrisch überbrücken.

4. Elektrischer Universalmotor nach Anspruch 1, dadurch gekennzeichnet, daß die beidseitigen, die Lagerschilde bildenden Lagerbügel (10, 10') eine endseitige Grundplatte (10a) sowie von dieser an gegenüberliegenden Stellen ausgehend Bügel (10b, 10c; 10b', 10c') umfassen, die mit Endfortsätzen (24) in direkt in das Statorpaket eingearbeitete Aufnahmenuten (25a, 25b) eingreifen.

5. Elektrischer Universalmotor nach Anspruch 4, dadurch gekennzeichnet, daß die Bügel (10b, 10c; 10b', 10c') einschließlich der Grundplatte (10a) eine umlaufende, hochgezogene Randkante (15) aufweisen und daher im Querschnitt selbst eine U-Form bilden und daß die bei den in die Statoraufnahmenuten (25a, 25b) eingeschobenen Fortsätzen (24) der Bügel fehlende Randkante eine Anschlagfläche (15a, 15b) bildet, die sich außen an das Statorpaket zur Begrenzung des Einführungswegs anlegt.

6. Elektrischer Universalmotor nach Anspruch 4, dadurch gekennzeichnet, daß die Aufnahmenuten (25a, 25b) im Stator (14) eine mindestens teilweise geschlossene Form aufweisen.

7. Elektrischer Universalmotor nach Anspruch 6, dadurch gekennzeichnet, daß die Aufnahmenuten (25a, 25b) die eingeführten Fortsätze (24) der Bügel überkragend mit Ansätzen (26) auch von oben im Randbereich überdecken.

8. Elektrischer Universalmotor nach einem der Ansprüche 1 bis 7, dadurch gekennzeichnet, daß die Lagereinsätze (12, 12') ringförmige Abschulterungen aufweisen und in die Zentrierbohrungen (11) der beidseitigen Lagerbügel (10, 10') mit einem Ringvorsprung eingesetzt und durch Verkeilen, Verstemmen, Verklinken, Umbördeln u. dgl. gehalten sind und in ihrem Inneren beliebige Lager (Wälzlager 13, Kalottenlager 23) für die Rotorwelle (16) aufnehmen.

9. Elektrischer Universalmotor nach Anspruch 2, dadurch gekennzeichnet, daß vier von der Stanzgitterform (29) ausgehende erste Anschlußkontakte vier längere Terminals (38) bilden, die in mit dem Statorpaket fest verbundenen Aufnahmebuchsen (39) verkeilt sind.

10. Elektrischer Universalmotor nach Anspruch 9, dadurch gekennzeichnet, daß die axial zu den Aufnahmebuchsen (39) des Statorpakets (14) geführten zungenartigen Terminals (38) aus metallischem Material ferner im Durchdringungsbereich der aus einem Kunststoff bestehenden Trägerplatte (38) seitlich vorspringende Verzahnungen, Haken oder Verrastungsnasen aufweisen, mit welchen sie eine feste Verbindung mit der Trägerplatte (38) eingehen zur gleichzeitigen Sicherung der Gitterform (29).

11. Elektrischer Universalmotor nach Anspruch 3, dadurch gekennzeichnet, daß die flache Scheibe der Stanzgitterform (29) dort, wo an ihr die Bürstenhalter (43) befestigt sind, mindestens die Fläche der Bürstenhalter (43) aufweisende Bürstenhalter-Lagerflächen (36a, 36b) bildet, auf denen die Bürstenhalter (43) aufliegen, wobei die Bürstenhalter-Lagerflächen (36a, 36b) der Gitterform (29) die fehlende Begrenzungsseite der in Richtung auf den Kollektor offenen, kastenförmigen Bürstenhalter (43) bilden.

12. Elektrischer Universalmotor nach Anspruch 11, dadurch gekennzeichnet, daß die Bürstenhalter in Richtung auf die Stanzgitterform (29), an der sie befestigt sind, ragende Verrastungszapfen (44) aufweisen, mit denen sie Schlitze (45') in der Trägerplatte (28) durchdringen und sich in diesen über seitliche Sägeformen, vorspringende Haken, Rastnasen u. dgl. verankern zur ergänzenden Sicherung der Gitterform (29) auf der Trägerplatte und zur festen Verankerung und breitflächigen Kontaktgabe zwischen dem Bürstenhalter (43) und der Stanzgitterform (29).

13. Elektrischer Universalmotor nach einem der Ansprüche 1 bis 12, dadurch gekennzeichnet, daß die Kohlebürsten durch innerhalb der Bürstenhalter (43) befindliche, schraubenförmig gewendelte Druckfedern (45) in Richtung auf den Kollektor vorgespannt sind.

14. Elektrischer Universalmotor nach einem der Ansprüche 1 bis 13, dadurch gekennzeichnet, daß die den Schaltring (32) zur Ermöglichung von dessen Verdrehung in einer zentralen Bohrung aufnehmende lagerbügelseitige Halteplatte (31) axiale Vorsprünge (31a) aufweist, mit denen sie bis hinter die Trägerplatte (28) greift und diese erfaßt und sichert und daß die Halteplatte (31) selbst durch Verankerungsmittel mit dem zugewandten Lagerbügel (10') drehfest verbunden ist.

15. Elektrischer Universalmotor nach Anspruch 14, dadurch gekennzeichnet, daß die Verankerungsmittel für die Halteplatte (31) von dieser ausgehende noppenförmige Zapfen (34) sind, die in entsprechend ausgerichtete, zugeordnete Aufnahmebohrungen in der Lagerbügel-Grundplatte (10a) eingreifen.

16. Elektrischer Universalmotor nach Anspruch 3, dadurch gekennzeichnet, daß je nach Ausstanzen von Verbindungsbrücken im Leitungsbandmaterial der Stanzgitterform (29) durch die durch die Verdrehung des Schaltrings (32) bewirkte unterschiedliche Verbindung von Schaltzungen (42) unterschiedliche Drehrichtungen bzw. Ein- oder Ausschaltvorgänge bestimmbar sind.

17. Elektrischer Universalmotor nach einem der Ansprüche 1 bis 16, dadurch gekennzeichnet, daß in einer durch axiale Druckeinwirkung von außen durch Bohrungen im Lagerbügel (10') und Halteplatte (31) zugänglichen Fläche jedes Bürstenhalters (43) ein wippenartiger Sperriegel (46) gebildet ist, der vor Erreichen des endmontierten Zustandes die im Bürstenhalter (43) unter Federvorspannung gelagerten Kohlebürsten gegen ein Herausspringen sichert.

18. Elektrischer Universalmotor nach Anspruch 17, dadurch gekennzeichnet, daß der Sperriegel in Form einer Wippe (46) aus dem Material des Bürstenhalters (43), beispielsweise durch Ausstanzen, gebildet ist, die etwa mittig mit beidseitigen Materialbrücken (48) mindestens teilweise verschwenkbar an der verbleibenden Wandung jedes Bürstenhalters (43) gelagert ist derart, daß je nachdem, ob oberhalb oder unterhalb der Schwenklagerung von außen auf die Wippe (46) gedrückt wird, diese mit einem Endhaken (49) die Kohlebürste hintergreift oder freigibt.

**Claims**

1. Universal electric motor for any drives, in particular electrical hand tools, office machinery, motor-driven garden tools and the like, having a stator and stator windings, rotatably mounted armature (21) with commutator (21a), carbon brushes and carbon mountings and having at both ends end shields forming the mounting for the shaft (16) bearing the armature (21), the end shields at both ends being constructed to be bracket-shaped to form bearing brackets (10, 10') and being guided by continuation pieces as far as the stator stack (14) and being directly connected thereto, and both bearing brackets (10, 10') having central bores (11) for receiving bearings (13, 23) for bearing inserts (12, 12') containing the armature shaft (16), characterized in that, in an axial layered arrangement starting from the end shield on the ventilator side and adjoining the armature in this order, there are arranged a first support plate (28), lying thereon and secured thereto a pressed lattice (29) which forms the electrical wiring and has brush holders (43) associated with it, and subsequently a holding plate (31), in that adjacent the holding plate (31) and rotatably arranged in a bore thereof there is received a switching ring (32), in that the pressed lattice (29) comprises a pressed-out disc of electrical material with wires similar to flat strips and connected by way of bridges (which can be pressed out), connection contacts (38, 42) going out to both sides from the pressed lattice (29) and on the one hand contacting electrical connections in the stator directly and on the other hand being aligned towards the switching ring (32).

2. Universal electric motor according to Claim 1, characterized in that first connection contacts pass through the support plate (28) and are connected to the connections of the stator in the form of terminals (38), while the connection contacts going out in the opposite axial direction from the pressed lattice (29) form reversing contacts for the switching ring (32), in the form of switching tongues (42).

3. Universal electric motor according to Claim 1 or 2, characterized in that the pressed lattice (29) electrically conductively houses carbon brush mountings (43), and switching bracket supports (52) axially aligned towards the pressed lattice (29) and having switching contact springs (54) project from the switching ring (32) and, depending on the position of the switching ring, electrically bridge corresponding switching tongues (42).

4. Universal electric motor according to Claim 1, characterized in that the bearing brackets (10, 10') on both sides which form the end shields include an end-side base plate (10a) and brackets (10b, 10c; 10b', 10c'), projecting therefrom at opposing positions and engaging by means of end continuation pieces (24) in receiving grooves (25a, 25b) made directly in the stator stack.

5. Universal electric motor according to Claim 4, characterized in that the brackets (10b, 10c; 10b', 10c') including the base plate (10a) have a peripheral erect marginal edge (15) and thus themselves form a U shape in cross-section, and in that the marginal edge, which is missing from the continuation pieces (24) of the brackets which are pushed into the stator receiving grooves (25a, 25b), forms a stop surface (15a, 15b) which bears on the outside against the stator stack to limit the introduction path.

6. Universal electric motor according to Claim 4, characterized in that the receiving grooves (25a, 25b) in the stator (14) have an at least partially closed shape.

7. Universal electric motor according to Claim 6, characterized in that the receiving grooves (25a, 25b) cover the introduced continuation pieces (24) of the brackets in projecting manner by way of lugs (26), also from above in the edge region.

8. Universal electric motor according to one of Claims 1 to 7, characterized in that the bearing inserts (12, 12') have annular shoulders and are inserted in the centring bores (11) of the bearing brackets (10, 10') arranged on both sides by means of an annular projection and are held by wedging, caulking, latching, crimping or the like and receive in their interior any bearings (roller bearings 13, convex bearings 23) for the rotor shaft (16).

9. Universal electric motor according to Claim 2, characterized in that four first connection contacts going out from the pressed lattice (29) form four relatively long terminals (38) which are wedged into receiving bushes (39) fixedly connected to the stator stack.

10. Universal electric motor according to Claim 9, characterized in that the tongue-type terminals (38) guided axially to the receiving bushes (39) of the stator stack (14) and made of metal material furthermore have in the penetration region of the support plate (38) made of a plastics material laterally projecting toothings, hooks or latching noses by means of which they enter into a fixed connection with the support plate (38) in order to simultaneously secure the lattice (29).

11. Universal electric motor according to Claim 3, characterized in that the flat disc of the pressed lattice (29) forms, where the brush holders (43) are secured to it, brush holder bearing surfaces (36a, 36b) which have at least the surfaces of the brush holders (43) on which the brush holders (43) lie, the brush holder bearing surfaces (36a, 36b) of the lattice (29) forming the missing delimitation side of the box-shaped brush holders (43) which are open in the direction of the commutator.

12. Universal electric motor according to Claim 11, characterized in that the brush holders have in the direction of the pressed lattice (29) on which they are secured projecting latching pegs (44) by means of which they pass through slots (45') in the support plate (28) and anchor themselves in the slots by way of lateral sawtooth shapes, projecting hooks, latching noses and the like, for an additional securing of the lattice (29) on the support plate and for the fixed anchoring and broad-surface contact between the brush holder (43) and the pressed lattice (29).

13. Universal electric motor according to one of Claims 1 to 12, characterized in that the carbon brushes are biased in the direction of the commutator by helical pressure springs (45) within the brush holders (43).

14. Universal electric motor according to one of Claims 1 to 13, characterized in that the holding plate (31) on the bearing bracket side, receiving the switching ring (32) to allow for its rotation in a central bore, has axial projections (31a) by means of which it reaches behind the support plate (28) and grasps and secures the latter, and in that the holding plate (31) is itself connected non-rotatably by anchoring means to the facing bearing bracket (10').

15. Universal electric motor according to Claim 14, characterized in that the anchoring means for the holding plate (31) are knob-shaped pegs (34) projecting therefrom and engaging in correspondingly aligned associated receiving bores in the bearing bracket base plate (10a).

16. Universal electric motor according to Claim 3, characterized in that, depending on which connection bridges are pressed out of the conductor strip material of the pressed lattice (29), different directions of rotation or switching-on and switching-off procedures are determinable by the different connection of switching tongues (42) effected by rotating the switching ring (32).

17. Universal electric motor according to one of Claims 1 to 16, characterized in that a rocker-type locking bar (46) is formed in a surface of each brush holder (43) accessible by axial pressure action from the outside through bores in the bearing bracket (10') and holding plate (31), and this rocker-type locking bar (46), before the end-mounted condition is reached, secures the carbon brushes mounted in the brush holder (43) with spring bias against springing out.

18. Universal electric motor according to Claim 17, characterized in that the locking bar is in the form of a rocker (46) formed from the material of the brush holder (43), for example by pressing out, and this rocker (46) is mounted at least partly pivotally, approximately centrally with material bridges (48) on both sides, on the remaining wall of each brush holder (43) such that, depending on whether pressure on the rocker (46) from outside is above or below the pivotal bearing, the rocker (46) engages behind or releases the carbon brush by means of an end hook (49).

**Revendications**

1. Moteur électrique universel pour n'importe quel entraînement, en particulier pour celui d'outils électriques à main, de machines de bureau, d'outils de jardinage entraînés par un moteur et autres appareils analogues, avec un stator et des enroulements de stator, un induit (21) monté de façon à pouvoir tourner, avec un collecteur (21a), des balais de charbon et des supports de balais ainsi que des flasques des deux côtés, formant les paliers pour l'arbre (16) portant l'induit (21), dans lequel les flasques des deux côtés ont la forme d'étriers grâce à la formation d'étriers de palier (10, 10') et sont amenés par des prolongements jusqu'au paquet de tôles du stator (14) et sont directement reliés à celui-ci et dans lequel les deux étriers (10, 10') présentent des alésages centraux (11) pour recevoir des paliers (13, 23) pour les boîtiers de palier (12, 12') contenant l'arbre d'induit (16), moteur électrique universel caractérisé en ce que dans l'empilement axial en partant du flasque situé du côté du ventilateur soient disposées dans cet ordre une première plaque support (28) se raccordant à l'induit, une grille (29) estampée fixée à la première plaque en formant le câblage électrique, des porte-balais (43) associés à cette grille et à la suite une plaque de fixation (31), en ce qu'un anneau de jarretière (32) adjacent à la plaque de fixation (31) et disposé de façon à pouvoir tourner dans un alésage de celle-ci est prévu, en ce que la grille estampée (29) consiste en une plaque estampée dans une matière conduisant l'électricité avec des conducteurs semblables à des rubans plats, reliés par l'intermédiaire de ponts (susceptibles d'être découpés par estampage), des contacts de raccordement (38, 42) partant de la grille estampée (29), contacts qui d'une part mettent directement en contact des raccordements électriques dans le stator et d'autre part sont amenés à l'anneau de jarretière (32).

2.   Moteur électrique universel selon la revendication 1, caractérisé en ce que les premiers contacts de raccordement passent à travers la plaque support (28) et sont reliés sous la forme de terminaux (38) aux raccordements du stator, tandis que les contacts de raccordement partant dans le sens axial opposé de la grille estampée (29) constituent sous forme de languettes (42) des languettes de commutation pour l'anneau de jarretière (32).

3.   Moteur électrique selon la revendication 1 ou 2, caractérisé en ce que la grille estampée (29) sert de base conduisant électriquement aux supports de balais de charbon (43) et des supports d'étrier (52) avec des ressorts de contact (54) partent de l'anneau de jarretière (32) orienté axialement vers la grille estampée (29), ressorts qui en fonction de la position de l'anneau de jarretière pontent électriquement les languettes correspondantes de branchement (42).

4.   Moteur électrique universel selon la revendication 1, caractérisé en ce que les étriers de palier (10, 10') des deux côtés constituant les flasques de palier entourent une plaque de base (10a) terminale ainsi que des étriers (10b, 10c ; 10b', 10c') partant de cette plaque à des endroits situés en regard les uns des autres, étriers qui pénètrent par des prolongements terminaux (24) dans des rainures réceptrices (25a, 25b) usinées directement dans le paquet de tôles du stator.

5.   Moteur électrique universel selon la revendication 4, caractérisé en ce que les étriers (10b, 10c ; 10b', 10c') présentent y compris la plaque de base (10a) une arête de bordure périphérique, tirée vers le haut (15) et constituent en conséquence en section transversale une forme en U et en ce que dans les prolongements (24) enfoncés dans les rainures réceptrices du stator (25a, 25b) des étriers, une arête de bordure manquante constitue une surface de butée (15a, 15b), qui s'appuie de l'extérieur sur le paquet de tôles du stator pour délimiter le chemin d'introduction.

6.   Moteur électrique universel selon la revendication 4, caractérisé en ce que les rainures réceptrices (25a, 25b) présentent dans le stator une forme au moins en partie fermée.

7.   Moteur électrique universel selon la revendication 6, caractérisé en ce que les rainures réceptrices (25a, 25b) recouvrent les prolongements de l'étrier introduits (24) en porte-à-faux avec des appendices (26) aussi d'en haut dans la zone du bord.

8.   Moteur électrique selon l'une des revendications 1 à, caractérisé en ce que les boîtes de paliers (12, 12') présentent des épaulements de forme annulaire et sont montées dans les alésages de centrage (11) des étriers de palier (10, 10') à deux côtés avec une saillie annulaire et sont maintenus par coincement, matage, encliquetage, rabattement des bords et autres procédés analogues et reçoivent à l'intérieur n'importe quels paliers (des appuis à rouleaux, des appuis à calotte 23) pour l'arbre du rotor (16).

9.   Moteur électrique selon la revendication 2, caractérisé en ce que quatre premiers contacts de raccordement partant de la grille estampée (29) forment quatre terminaux plus longs, qui sont clavetés dans des douilles réceptrices (39) reliées fixement au paquet du stator.

10.  Moteur électrique universel selon la revendication 9, caractérisé en ce que les terminaux (38) en matière métallique du type à languette montés axialement en direction des douilles réceptrices (39) du paquet de tôles du stator (14) présentent en outre dans la zone de pénétration de la plaque support (38) réalisée en matière plastique, des dentures, des crans, ou des nez d'encliquetage faisant saillie latéralement, avec lesquels ils forment une liaison fixe avec la plaque support (38) pour bloquer en même temps la grille (29).

11.  Moteur électrique universel selon la revendication 3, caractérisé en ce que le disque plat de la grille estampée (29) constitue, à l'endroit où sont fixés sur celle-ci des porte-balais (43), au moins les surfaces d'appui de porte-balais (36a, 36b) recevant les porte-balais (43), surfaces sur lesquelles sont montés les porte-balais (43), les surfaces d'appui (36a, 36b) de la grille (29) constituant le côté manquant de délimitation du porte-balai (43) ouvert en direction du collecteur, en forme de boîte.

12. Moteur électrique universel selon la revendication 11, caractérisé en ce que les supports de balais présentent en direction de la grille estampée (29) à laquelle ils sont fixés, des tétons d'encliquetage (44) faisant saillie, avec lesquels ils passent à travers des fentes (45') dans la plaque support (28) et s'ancrent dans celle-ci par l'intermédiaire de formes latérales en dents de scie, de crans faisant saillie, de nez d'encliquetage ou d'éléments analogues pour une fixation additionnelle de la grille (29) sur la plaque support et pour un ancrage solide et une mise en contact sur une large surface du porte-balai (43) et de la grille estampée (29).

13. Moteur électrique universel selon l'une des revendications 1 à 12, caractérisé en ce que les balais de charbon sont précomprimés par des ressorts (45) de pression se trouvant à l'intérieur des porte-balais (43), enroulés en forme de spirale.

14. Moteur électrique universel selon l'une des revendications 1 à 13, caractérisé en ce que la plaque de fixation (31) située du côté de l'étrier de palier recevant l'anneau de jarretière (32) pour permettre sa rotation dans un alésage central présente des saillies axiales (31a), avec lesquelles elle vient en prise jusqu'en arrière de la plaque support (28) et saisit celle-ci et la bloque et en ce que la plaque de fixation (31) est elle-même reliée sans pouvoir tourner par des moyens d'ancrage à l'étrier de palier (10') tourné vers elle.

15. Moteur électrique universel selon la revendication 14, caractérisé en ce les moyens d'ancrage pour la plaque de fixation (31) sont constitués par des tétons (34) en forme de nopes partant de celle-ci, qui viennent en prise dans des alésages récepteurs orientés de façon correspondante, associés dans la plaque de base (10a) des étriers de palier.

16. Moteur électrique universel selon la revendication 3, caractérisé en ce que l'on peut déterminer des sens de rotation différents ou des processus de mise en marche ou d'arrêt, selon les saillies réalisées par estampage constituant des ponts de liaison dans la bande conductrice de la grille estampée (29) au moyen de la liaison de languettes (42) différente produite par la rotation de l'anneau de jarretière (32).

17. Moteur électrique universel selon l'une des revendications 1 à 16, caractérisé en ce que l'on forme un verrou de blocage (46) du type archet dans une face accessible de chaque porte-balai (43) grâce à l'action de la pression axiale de l'extérieur à travers des alésages dans l'étrier de palier (10') et la plaque de fixation (31), verrou qui empêche, avant d'avoir atteint l'état final du montage, les balais de charbon, montés dans les porte-balais (43) en étant comprimés par ressort, de sauter à l'extérieur.

18. Moteur électrique universel selon la revendication 17, caractérisé en ce que le verrou de blocage est constitué sous forme d'une bascule (46) dans la matière du porte-balai (43), par exemple par estampage, archet qui est monté environ au milieu des ponts de matière (48) des deux côtés et peut au moins en partie pivoter sur la paroi subsistante de chaque porte-balai (43) de telle façon que, selon que l'on appui en-dessus ou d'en-dessous de la position de basculement de l'extérieur sur l'archet (46), celui-ci met en prise avec un crochet terminal (49) le balai de charbon ou le libère.

# Fig.1

EP 0 322 832 B1

Fig.2

Fig.3

Fig.5

Fig.4

Fig.7

Fig.6

Fig.8

Fig.9

Fig.10

Fig.11

Fig.12

Fig.13

Fig.14

Fig.15

# Fig.16

52

32

52

# Fig.17

32

# Fig.18

47    43
46
48    48

# Fig.19

44    43
A
44
49

# Fig.20 a

a) Drehrichtung rechts

b) Drehrichtung links

c) Drehrichtung rechts und links